(19) **Europäisches Patentamt / European Patent Office / Office européen des brevets**

(11) **EP 1 895 131 B1**

(12) **EUROPEAN PATENT SPECIFICATION**

(45) Date of publication and mention
of the grant of the patent:
**17.08.2011 Bulletin 2011/33**

(51) Int Cl.:
*F02D 41/14* *(2006.01)*   *F02D 41/22* *(2006.01)*
*F02D 41/12* *(2006.01)*

(21) Application number: **07017154.1**

(22) Date of filing: **31.08.2007**

(54) **Abnormality determination apparatus and method for temperature detector**

Abweichungsbestimmungsvorrichtung und Verfahren für einen Temperatursensor

Appareil et procédé de détermination d'anomalies pour capteur de température

(84) Designated Contracting States:
**DE GB**

(30) Priority: **01.09.2006 JP 2006238219**

(43) Date of publication of application:
**05.03.2008 Bulletin 2008/10**

(73) Proprietor: **HONDA MOTOR CO., LTD.**
**Tokyo 107-8556 (JP)**

(72) Inventors:
• **Ohnishi, Hiroyuki**
  **Wako-shi**
  **Saitama 351-0193 (JP)**

• **Sasaki, Yuji**
  **Wako-shi**
  **Saitama 351-0193 (JP)**

(74) Representative: **Trossin, Hans-Jürgen et al**
**Weickmann & Weickmann**
**Postfach 860 820**
**81635 München (DE)**

(56) References cited:
**US-A1- 2002 111 734    US-A1- 2004 129 065**
**US-A1- 2004 230 366    US-A1- 2005 102 076**
**US-A1- 2006 137 436    US-B1- 6 550 464**

**Description**

BACKGROUND OF THE INVENTION

Field of the Invention:

The present invention relates to an abnormality determination apparatus according to the preamble of claim 1 and method according to the preamble of claim 3 for a temperature detector for detecting the temperature of exhaust gases exhausted from an internal combustion engine to an exhaust system.

Description of the Prior Art:

Such an abnormality determination apparatus for a temperature detector is known from the Laid-open Japanese Patent Application No. 2005-140069 and the US. Patent Application Publication 2005/0102076 both documents being in the same family. This temperature detector comprises a first and a second temperature sensor respectively for detecting the temperatures of exhaust gases at locations upstream and downstream of a DPF having an oxidation catalyst (hereinafter called the "upstream temperature" and "downstream temperature"), provided in an exhaust pipe of an internal combustion engine. In this abnormality determination apparatus, a determination is made as to whether or not the first and second temperature sensors are abnormal in the following manner when the internal combustion engine is immediately after a cold start or in a high-speed and high-load operating state. First, the downstream temperature is estimated in accordance with the upstream temperature detected by the first temperature sensor. The downstream temperature is estimated by annealing the upstream temperature using a time constant and a dead time which have been set based on an intake air amount. Then, one of the first and second temperature sensors is determined to be abnormal when the absolute value of the difference between the estimated downstream temperature and the downstream temperature detected by the second temperature sensor is larger than a predetermined value.

However, in the conventional abnormality determination apparatus described above, since the abnormality determination is executed only immediately after a cold start or a high-speed and high-load operating state of the internal combustion engine, the abnormality determination cannot be executed for the first and second temperature sensors unless the operating conditions are established. As such, in order to increase opportunities of executing the abnormality determination as much as possible, it is contemplated to execute the abnormality determination, for example, during a fuel cut for stopping supplying a fuel to the internal combustion engine. In this event, however, the following problem arises. Specifically, as a fuel cut is started, the upstream temperature immediately decreases to the accompaniment with a decreasing temperature of exhaust gases due to the stopped fuel. On the other hand, the downstream temperature decreases with a delay with respect to the upstream temperature because an oxidation reaction continues in an oxidation catalyst borne by a DPF immediately after the fuel cut is started, and converges to a stable temperature in accordance with the stabilizing upstream temperature after the decrease. Accordingly, it is desired to estimate such that a change in the downstream temperature is delayed with respect to the upstream temperature during the fuel cut.

On the other hand, the upstream temperature tends to frequently change due to fluctuations in the exhaust gas temperature immediately after a cold start or in a high-speed and high-load operating state in which the determination is essentially performed in the conventional abnormality determination apparatus. Therefore, if the downstream temperature is estimated with a delay characteristic equivalent to that during a fuel cut, the downstream temperature cannot be satisfactorily converged with respect to fluctuations in the upstream temperature when the delay characteristic of the downstream temperature is set large. As a result, the estimation accuracy degrades, with an associated degradation of the abnormality determination.

Also, a change in load of an internal combustion engine results in a change in the magnitude of a shift of an estimated downstream temperature with respect to the actual downstream temperature. For example, as a load of an internal combustion engine is higher, a larger amount of fuel is injected, and a larger amount of heat is generated through an oxidation reaction of an oxidation catalyst, leading to a susceptibility to an increase in a shift of an estimated downstream temperature. For this reason, the difference between the estimated downstream temperature and the detected downstream temperature also changes in accordance with the load, again leading to a lower accuracy of the abnormal determination based on this difference.

SUMMARY OF THE INVENTION

The present invention has been made to solve the problems as mentioned above, and it is an object of the invention to provide an abnormality determination apparatus and method for a temperature detector which is capable of improving the accuracy of abnormality determination.

To achieve the above object, according to a first aspect of the present invention, there is provided an abnormality determination apparatus for a temperature detector for detecting a temperature of exhaust gases emitted from an internal combustion engine to an exhaust system, comprising upstream temperature capturing means for capturing the temperature of the exhaust gases at a location upstream of an exhaust gas purifying device provided in the exhaust system as an upstream temperature, and a downstream temperature sensor for detecting the temperature of the exhaust gases at a location downstream of the exhaust gas purifying device as a downstream temperature. The abnormality determination apparatus is characterized by comprising fuel supply stop determining means for determining whether or not a supply of a fuel to the internal combustion engine is being stopped; downstream temperature estimating means for estimating the downstream temperature in accordance with the captured upstream temperature, so as to increase a delay in change in temperature with respect to the upstream temperature when it is determined that fuel supply to the internal combustion engine is being stopped compared to when the fuel is being supplied; and abnormality determining means for determining an abnormality in at least one of the upstream temperature capturing means and the downstream temperature sensor in accordance with a result of a comparison between the estimated downstream temperature and the detected downstream temperature when it is determined that fuel supply to said internal combustion engine is being stopped.

According to this abnormality determination apparatus for a temperature detector, the upstream temperature capturing means captures the temperature of exhaust gases at a location upstream of the exhaust gas purifying device as an upstream temperature, and the downstream temperature sensor detects the temperature of the exhaust gases at a location downstream of the exhaust gas purifying device as a downstream temperature. The downstream temperature estimating means estimates the downstream temperature in accordance with the captured upstream temperature, so as to increase a delay in change in temperature with respect to the upstream temperature when it is determined by the fuel supply stop determining means that fuel supply to the internal combustion engine is being stopped than when the fuel is being supplied. The abnormality determining means determines an abnormality of the upstream temperature capturing means and/or the downstream temperature sensor by comparing the estimated downstream temperature with the detected downstream temperature. For example, when the difference between both the downstream temperature is large, one of the upstream temperature capturing means and the downstream temperature sensor is determined to be abnormal.

As described above, during a fuel cut in which a fuel supply is stopped, the downstream temperature decreases with a delay with respect to the upstream temperature by the action of the exhaust gas purifying device immediately after the start of the fuel cut, and after the decrease, converges to a stable temperature in accordance with the upstream temperature. According to the present invention, since the downstream temperature is estimated to increase a delay in temperature change with respect to the upstream temperature during the fuel cut, the estimation can be accurately performed. On the other hand, since the downstream temperature is estimated to reduce the delay in temperature change during a fuel supply, the downstream temperature can be accurately estimated while satisfactorily reflecting a change in upstream temperature associated with fluctuations in exhaust gas temperature. Accordingly, by comparing the thus accurately estimated downstream temperature with the detected downstream temperature, abnormalities of the temperature detector can be appropriately determined in any of the fuel cut and the fuel supply, to improve the determination accuracy.

Also, in addition to the fuel supply, the abnormality determination can be made even during the fuel cut as well, opportunities of executing the abnormality determination can be sufficiently ensured.

To achieve the above object, according to a second aspect of the present invention, there is provided an abnormality determination method for a temperature detector for detecting a temperature of exhaust gases emitted from an internal combustion engine to an exhaust system, wherein the temperature of the exhaust gases at a location upstream of an exhaust gas purifying device provided in the exhaust system is captured by upstream temperature capturing means as an upstream temperature, and the temperature of the exhaust gases at a location downstream of the exhaust gas purifying device is detected by downstream temperature sensor as a downstream temperature. The abnormality determination method is characterized by comprising the steps of determining whether or not a supply of a fuel to the internal combustion engine is being stopped; estimating the downstream temperature in accordance with the captured upstream temperature, so as to increase a delay in change in temperature with respect to the upstream temperature when it is determined that fuel supply to the internal combustion engine is being stopped compared to when the fuel is being supplied; and determining an abnormality in at least one of the upstream temperature capturing means and the downstream temperature sensor in accordance with a result of a comparison between the estimated downstream temperature and the detected downstream temperature when it is determined that fuel supply to said internal combustion engine is being stopped..

This method provides the same advantageous effects as described above concerning the abnormality determination apparatus according to the first aspect of the invention.

Preferably, in the abnormality determination apparatus for a temperature detector described above, the downstream temperature estimating means comprises a filter circuit.

Generally, characteristics of a filter circuit can be arbitrarily set by changing the time constant. According to this embodiment, since the downstream temperature estimating means comprises a filter circuit, the downstream temperature can be accurately estimated in any of the fuel cut and the fuel supply, for example, by switching and setting the time constant of the filter circuit to conform to a change in downstream temperature with respect to the upstream temperature between the fuel cut and the fuel supply.

Preferably, in the abnormality determination method for a temperature detector described above, the downstream temperature is estimated using a filter circuit.

This preferred embodiment of the abnormality determination method provides the same advantageous effects as described above concerning the abnormality determination apparatus according to the first aspect of the invention.

According to a further embodiment, there is provided an abnormality determination apparatus for a temperature detector for detecting a temperature of exhaust gases emitted from an internal combustion engine to an exhaust system with the features of the first aspect of the invention, comprising further a temperature sensor for detecting the temperature of exhaust gases, load detecting means for detecting a load on the internal combustion engine, and threshold value setting means for setting a threshold value in accordance with the detected load. The abnormality determination apparatus is characterized by comprising exhaust gas temperature estimating means for estimating the temperature of the exhaust gases; and abnormality determining means for determining an abnormality of the temperature sensor based on a result of a comparison between a difference between the estimated temperature of the exhaust gases and the detected temperature of the exhaust gases, and the threshold.

According to this abnormality determination apparatus for a temperature detector, the threshold value setting means sets the threshold value in accordance with the detected load of the internal combustion engine, and the exhaust gas temperature estimating means estimates the temperature of exhaust gases emitted from the internal combustion engine to the exhaust system. The abnormality determining means determines an abnormality of the temperature sensor based on the result of a comparison between the difference between the estimated temperature of the exhaust gases and the temperature of the exhaust gases detected by the temperature sensor, and the threshold value. For example, the temperature sensor is determined to be abnormal when the difference between both the temperatures of the exhaust gases is equal to or larger than the threshold value.

When the temperature of exhaust gases is estimated, the magnitude of a deviation of an estimated temperature with respect to the actual temperature of the exhaust gases changes in accordance with a load on the internal combustion engine, and for example, tends to increase as a higher load is imposed on the internal combustion engine because the temperature of the exhaust gases also rises. According to the present invention, since the threshold value to be compared with the difference between the estimated temperature of the exhaust gases and the detected temperature of the exhaust gases is set in accordance with a load on the internal combustion engine, the threshold value can be appropriately determined in accordance with the susceptibility of the estimated temperature to a deviation. Accordingly, by determining an abnormality of the temperature sensor using the thus set threshold value, the determination can be appropriately made to improve the accuracy of the abnormality determination for the temperature detector.

According to a still further embodiment, there is provided an abnormality determination method for a temperature detector for detecting a temperature of exhaust gases emitted from an internal combustion engine to an exhaust system with the features of the second aspect of the invention, wherein the temperature of exhaust gases is detected by a temperature sensor, a load on the internal combustion engine is detected by load detecting means, and a threshold value is set in accordance with the detected load. The abnormality determining method is characterized by comprising the steps of estimating the temperature of the exhaust gases, and determining an abnormality of the temperature sensor based on a result of a comparison between a difference between the estimated temperature of the exhaust gases and the detected temperature of the exhaust gases, and the threshold.

This method provides the same advantageous effects as described above concerning the abnormality determination apparatus according to the further embodiment.

BRIEF DESCRIPTION OF THE DRAWINGS

Fig. 1 is a diagram generally showing the configuration of an abnormality determination apparatus according to the present invention, and an internal combustion engine to which the abnormality determination apparatus is applied;
Fig. 2 is a flow chart showing an exhaust gas sensor abnormality determination process;
Fig. 3 is a flow chart showing a pre-catalyst temperature sensor abnormality determination process;
Fig. 4 is a map used in the process of Fig. 3;
Fig. 5 is a flow chart showing a process of calculating an estimated post-catalyst gas temperature, executed in the process of Fig. 2;
Fig. 6 is a table for calculating a threshold value used in the process of Fig. 2; and
Figs. 7A and 7B are diagrams showing exemplary changes in pre-catalyst gas temperature, detected post-catalyst gas temperature, and estimated post-catalyst gas temperature during a fuel cut (A), and during a fuel supply (B).

DETAILED DESCRIPTION OF THE EMBODIMENT

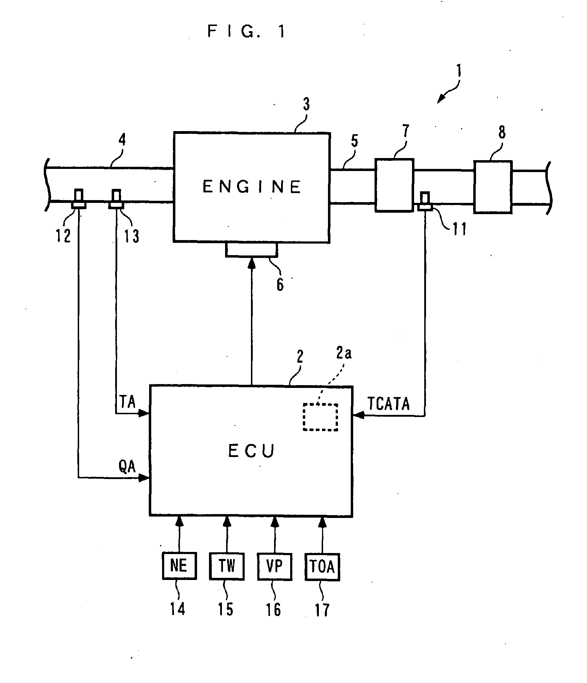

In the following, a preferred embodiment of the present invention will be described with reference to the drawings. Fig. 1 generally illustrates the configuration of an abnormality determination apparatus according to one embodiment of the present invention, and an internal combustion engine (hereinafter called the "engine") 3 to which the abnormality determination apparatus 1 is applied. The engine 3 is, for example, an in-line four-cylinder diesel engine equipped in a vehicle (not shown).

The engine is connected to an intake pipe 4 and an exhaust pipe 5 (exhaust system), and comprises a fuel injection valve (hereinafter called the "injector") 6 attached thereto.

The injector 6 is provided in each cylinder (not shown) of the engine 3, and is connected to a high pressure pump and a fuel tank (none of which is shown) in order through a common rail. A fuel in the fuel tank is boosted to a high pressure by the high pressure pump, sent to the injector 6 through the common rail, and injected into the cylinder from the injector 6. A fuel injection amount QINJ and an injection timing of the injector 6 are controlled by an ECU 2, later described.

The exhaust pipe 5 is provided with an oxidation catalyst 7 and a filter 8 in this order from the upstream side. The oxidation catalyst 7 (exhaust gas purifying device) oxidizes HC and CO within exhaust gases to purify the exhaust gases. The filter 8 traps particulate (hereinafter called the "PM") such as dust within the exhaust gases to reduce the PM emitted into the atmosphere. The filter 8 is regenerated by executing a regenerating operation as appropriate. This regenerating operation is performed by a post injection for additionally injecting the fuel into a combustion chamber (not shown) during an expansion stroke and/or an exhaust stroke of the engine 3. In this way, the temperature of exhaust gases flowing into the filter 8 is increased, the filter 8 is controlled to remain in a high temperature state, and the PM is burnt, thereby regenerating the filter 8.

An exhaust gas temperature sensor 11 is provided between the oxidation catalyst 7 and the filter 8 of the exhaust pipe 5. The exhaust gas temperature sensor 11 (downstream temperature sensor and temperature sensor) detects a temperature TCATA of exhaust gases immediately downstream of the oxidation catalyst 7 (hereinafter called the "detected post-catalyst gas temperature"), and outputs its detection signal to the ECU 2.

The intake pipe 4 is provided with an air flow sensor 12 and an intake air temperature sensor 13 in this order from the upstream side. The air flow sensor 12 detects an intake air amount QA, while the intake air temperature sensor 13 detects a temperature TA within the intake pipe 4 (hereafter called the "intake air temperature"), and their detection signals are outputted to the ECU 2.

The ECU 2 is further supplied with a detection signal indicative of a rotational speed NE of the engine 3 (hereinafter called the "engine rotational speed") from an engine rotational speed sensor 14 , a detection signal indicative of a temperature TW of cooling water which circulates within a cylinder block (not shown) of the engine 3 (hereinafter called the "engine water temperature"), a detection signal indicative of a speed VP of the vehicle (hereinafter called the "vehicle speed") from a vehicle speed sensor 16, and a detection signal indicative of an external air temperature TOA from an external air temperature sensor 17, respectively.

The ECU 2 comprises a micro-computer which comprises an I/O interface, a CPU, a RAM, a ROM and the like, and also comprises a filter circuit 2a and the like. The detection signals from a variety of the aforementioned sensors 11 - 17 are inputted to the CPU after they have undergone A/D conversion and reshaping in the I/O interface.

The CPU determines an operating condition of the engine, controls the engine 3 including the fuel injection amount QINJ, and executes an abnormality determination process for the exhaust gas temperature sensor 11 in accordance with a control program and the like stored in the ROM in response to these input signals. In this embodiment, the ECU 2 provides upstream temperature capturing means, fuel supply stop determining means, a downstream temperature estimating means, abnormality determining means, load detecting means, threshold value settingmeans, and exhaust gas temperature estimating means.

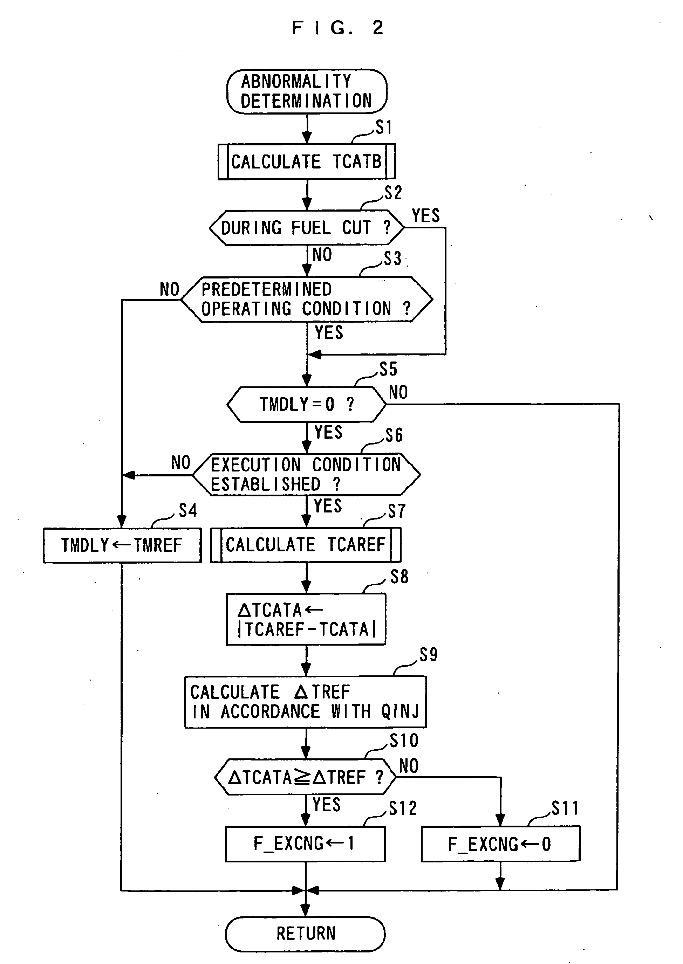

Fig. 2 is a flow chart illustrating an abnormality determination process for the exhaust gas temperature sensor 11. This process is executed every predetermined time (for example, every 100 msec). This process first calculates a temperature TCATC of exhaust gases upstream of the oxidation catalyst 7 (hereinafter called the "pre-catalyst gas temperature") at step 1 (abbreviated as "S1" in the figures. The same is applied to the following description).

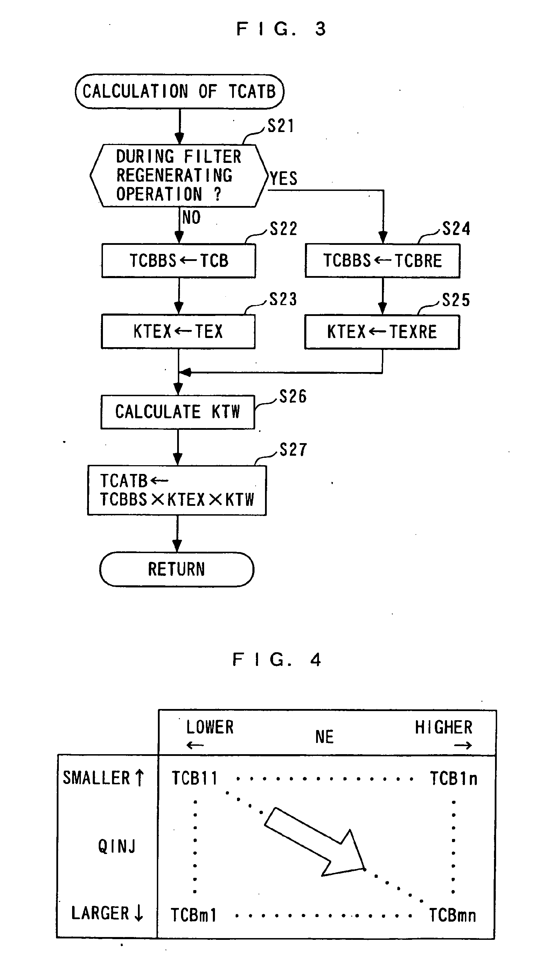

The pre-catalyst gas temperature TCATB is calculated by a calculation process shown in Fig. 3. First, at step 21, it is determined whether or not the regenerating operation is being executed for the filter 8. When the result of this determination is NO, a map value TCB for a normal operation is found by searching a map shown in Fig. 4 in accordance with the engine rotational speed NE and fuel injection amount QINJ, and is set as a basic value TCBBS of the pre-catalyst gas temperature TCATB (step 22).

In this map, the map value TCB is set to a larger value as the engine rotational speed NE is higher, or the fuel injection amount QINJ is larger because the combustion temperature in the engine 3 is higher and the temperature of exhaust gases is also higher.

Next, at step 23, a map value TEX for a normal operation is retrieved from a map (not shown) in accordance with the vehicle speed VP and intake air temperature TA, and is set as a temperature correction coefficient KTEX.

On the other hand, when the result of the determination at step S21 is YES, indicating that the regenerating operation is being performed for the filter 8, a map value TCBRE for the regenerating operation is retrieved from a map (not shown) in accordance with the engine rotational speed NE and fuel injection amount QINJ in a manner similar to the aforementioned step 22, and is set as a basic value TCBBS for the pre-catalyst gas temperature (step 24). Likewise, in this map, the map value TCBRE is set to a larger value as the engine rotational speed NE is higher or as the fuel injection amount QINJ is larger, for the reason set forth above. Also, this map value TCBRE is set to a larger value than the map value TCB for the normal operation over the entire region of the engine rotational speed NE and fuel injection amount Q. This is because during the regenerating operation for the filter 8, the temperature of exhaust gases is increased by a post injection which is performed in order to burn PM deposited in the filter 8.

Next, a map value TEXRE for the regenerating operation is retrieved from a map (not shown) in accordance with the vehicle speed VP and intake air temperature TA, and set as a temperature correction coefficient KTEX, in a manner similar to the aforementioned step 23 (step 25).

At step 26 subsequent to step 23 or step 25, a table (not shown) is searched in accordance with the engine water temperature TW to calculate a water temperature correction coefficient KTW.

Next, the basic value TCBBS is multiplied by the temperature correction coefficient KTEX and water temperature correction coefficient KTW to calculate the pre-catalyst gas temperature TCATB (step 27). The temperature correction coefficient KTEX is set to a smaller value as the vehicle speed VP is higher or the intake air temperature TA is lower, while the water temperature correction coefficient KTW is set to a smaller value as the engine water temperature TW is lower. This is because as the intake air temperature TA is lower, or as the engine water temperature TW is lower, the combustion temperature and temperature of exhaust gases are lower, and as the vehicle speed VP is higher, the exhaust system including the exhaust pipe 5 is cooled down more by a running wind to more cool down the exhaust gases.

Turning back to Fig. 2, at step 2 subsequent to step 1, it is determined whether or not a fuel cut is under progress for stopping supplying the fuel to the engine 3. In this determination, the fuel cut is determined when the fuel injection amount QINJ is substantially zero, and when the engine rotational speed NE is equal to or higher than a predetermined rotational speed. When the result of this determination is NO, it is determined whether or not the engine is in a predetermined operating condition (step 3). In this determination, the engine is determined to be in the predetermined operating condition when all the following conditions A - F are satisfied:

A. the fuel injection amount QINJ is equal to or larger than a predetermined amount;
B. the engine rotational speed NE is equal to or higher than a predetermined rotational speed;
C. the absolute value of the difference between the preceding value and the current value of the fuel injection amount QINJ is equal to or smaller than a predetermined value;
D. the absolute value of the difference between the preceding value and the current value of the engine rotational speed NE is equal to or smaller than a predetermined value;
E. the absolute value of the difference between the preceding value and the current value of the pre-catalyst gas temperature TCATB is equal to or smaller than a predetermined value; and
F. the absolute value of the difference between the preceding value and the current value of the detected post-catalyst gas temperature TCATA is equal to or smaller than a predetermined value.

When the result of this determination is NO, a timer value TMDLY of a down-count type delay timer (not shown) is set to a predetermined time TMREF (for example, 10 sec) (step 4), on the assumption that the operating condition of the engine 3 and the temperature of exhaust gases are not stable so that the operating condition is not appropriate for performing the abnormality determination, followed by the termination of this process.

On the other hand, when the result of the determination at step 2 or step 3 is YES, it is determined whether or not the timer value TMDLY is zero (step 5). When the result of this determination is NO, this process is terminated. On the other hand, when the result of the determination at step 5 is YES, i.e., when the fuel cut or the predetermined operating condition continues for the predetermined time TMREF, it is determined whether or not other execution conditions for performing the abnormality determination are established, on the assumption that these operating conditions are stably performed.

In this determination, the other execution conditions are determined to be established when the following conditions G - M are all satisfied:

G. the engine water temperature TW is equal to or higher than a predetermined temperature;
H. the external air temperature TOA is equal to or higher than a predetermined temperature;
I. the pre-catalyst gas temperature TCATB is equal to or higher than a predetermined temperature;

J. the detected post-catalyst gas temperature TCATA is equal to or higher than a predetermined temperature;

K. an exhaust gas mass flow rate MF is equal to or larger than a predetermined amount;

L. the vehicle speed VP is equal to or higher than a predetermined value; and

M. no abnormality in voltage value of the exhaust gas temperature sensor 11 is detected.

The exhaust gas mass flow rate MF is calculated, for example, by searching a map (not shown) in accordance with the intake air amount QA, the fuel injection amount QINJ, and the engine rotational speed NE.

When the result of the determination is NO, the aforementioned step 4 is executed. On the other hand, when the result of the determination at step 6 is YES, a temperature TCAREF of exhaust gases downstream of the oxidation catalyst 7 (hereinafter called the "estimated post-catalyst gas temperature") is calculated (step 7).

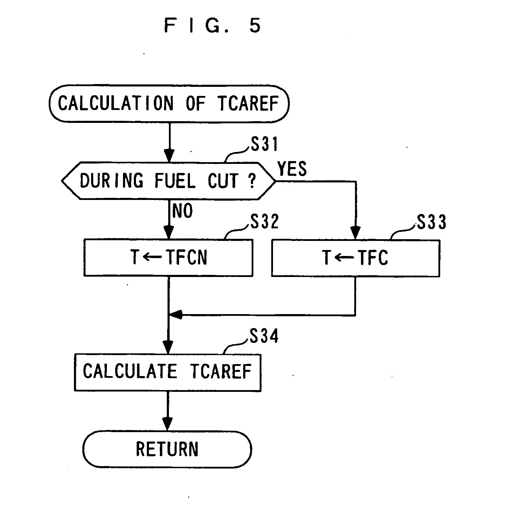

The estimated post-catalyst gas temperature TCAREF is calculated in the filter circuit 2a of the ECU 2 by a calculation process shown in Fig. 5. First at step 31, it is determined whether or not a fuel cut is under progress. When the result of this determination is NO, indicating that the fuel is being supplied, a predetermined value TFCN is set as a time constant T (step 32), followed by a transition to step 34.

On the other hand, when the result of the determination at step 31 is YES, indicating that the fuel is being cut, a predetermined value TFC for the fuel cut larger than the predetermined value TFCN is set as the time constant T (step 33), followed by a transition to step 34.

At step 34, the estimated post-catalyst gas temperature TCAREF is calculated by the following Equation (1) using the pre-catalyst gas temperature TCATB calculated at step 1, the time constant T set at step 32 or 33, and the like, followed by the termination of this processing:

$$TCAREF = TCATB + EXP(-t/T) \times (TCAREFZ - TCATB) \quad \ldots$$

$$(1)$$

where t is a period at which the process is executed (for example, 100 msec), and TCAREFZ is the preceding value of the estimated post-catalyst gas temperature. Also, EXP(-t/T) in the second term on the right side of Equation (1) represents the degree of a delay in a change of the estimated post-catalyst gas temperature TCAREF with respect to the pre-catalyst gas temperature TCATB. As described above, the time constant T is set to a larger value in the fuel cut than when the fuel is being supplied. Therefore, during the fuel cut, EXP(-t/T) in the second term on the right side increases, and the second term increases relative to the first term, thereby resulting in a larger delay of the estimated post-catalyst gas temperature TCAREF with respect to the pre-catalyst gas temperature TCATB. The predetermined values TFCN, TFC for determining the time constant T are set to conform to a delay in change of the actual post-catalyst gas temperature with respect to the pre-catalyst gas temperature during the fuel supply and the fuel cut, respectively, and are found, for example, through experiments.

Turning back to Fig. 2, at step 8, the absolute value of the difference between the calculated estimated post-catalyst gas temperature TCAREF and the detected post-catalyst gas temperature TCATC detected by the exhaust gas temperature sensor 11 (=|TCAREF-TCATA|) is calculated as a gas temperature difference ATCATA.

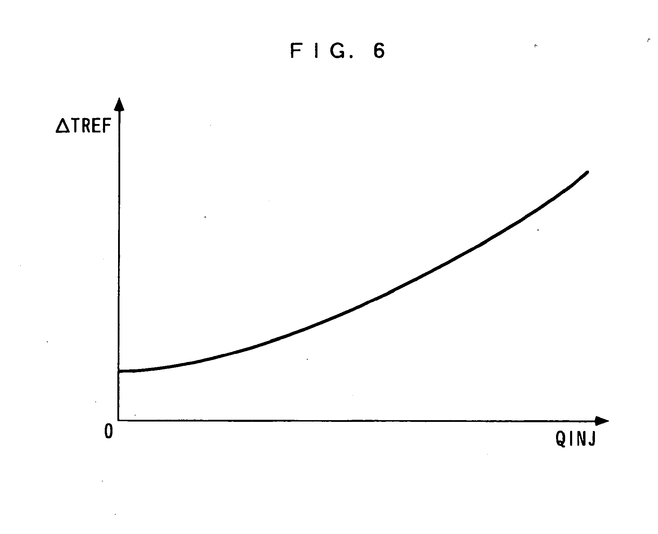

Next, a threshold value ΔTREF is calculated by searching a table shown in Fig. 6 in accordance with the fuel injection amount QINJ (step 9). In this table, the threshold value ATREF is set to a larger value as the fuel injection amount QINJ is larger. This is because as the fuel injection amount QINJ is larger, the temperature of exhaust gases is higher, so that a deviation of the estimated post-catalyst gas temperature TCAREF with respect to the actual post-catalyst gas temperature tends to increase, and the gas temperature difference ATCATA also tends to increase. During the fuel cut, the threshold value ΔTREF is set to a value corresponding to QINJ=0.

Next, it is determined whether or not the gas temperature difference ΔTCATA is equal to or larger than the threshold value ΔTREF (step 10). When the result of this determination is NO, a sensor abnormality flag F_EXCNG is set to "0" on the assumption that the exhaust gas temperature sensor 11 is normal (step 11), followed by the termination of this process.

On the other hand, when the result of the determination at step 10 is YES, indicating that ΔTCATA ≧ΔTREF, the exhaust gas temperature sensor 11 is determined to be abnormal due to a large deviation between the estimated post-catalyst gas temperature TCAREF and the detected post-catalyst gas temperature TCATA. Then, the sensor abnormality flag F_EXCNG is set to "1" for indicating this fact (step 12), followed by the termination of this process.

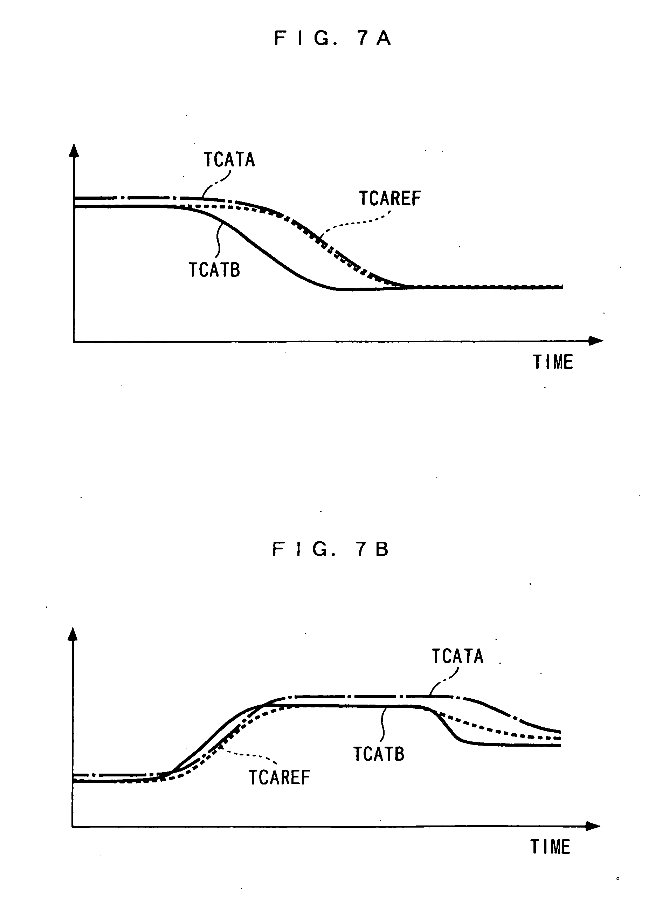

Figs. 7A and 7B show exemplary changes in the pre-catalyst gas temperature TCATB, the detected post-catalyst gas temperature TCATA, and the estimated post-catalyst gas temperature TCAREF during a fuel cut (A) and during a fuel supply (B) when the exhaust gas temperature sensor 11 is normal. During the fuel cut, since the time constant T is set to a larger value as described above, the estimated post-catalyst gas temperature TCAREF is calculated to increase a delay with respect to the pre-catalyst gas temperature TCATB, as shown in Fig. 7A, and as a result, substantially fits on the detected post-catalyst gas temperature TCATA.

On the other hand, during the fuel supply, since the time constant T is set to a value smaller than that during the fuel cut, the estimated post-catalyst gas temperature TCAREF is calculated to reduce the delay with respect to the pre-catalyst gas temperature TCATB, and as a result, changes with substantially the same delay as the detected post-catalyst gas temperature TCATA. Also, the estimated post-catalyst gas temperature TCAREF deviates from the detected post-catalyst gas temperature TCATA. This is attributable to the influence of a change in load on the engine 3, unlike during the fuel cut.

As described above, according to this embodiment, the time constant T for calculating the estimated post-catalyst gas temperature TCAREF is set to the predetermined value TFCN during a fuel supply (step 32), and set to a larger value TFC during a fuel cut (step 33). Accordingly, the estimated post-catalyst gas temperature TCAREF can be accurately calculated during any of the fuel cut and the fuel supply. Consequently, abnormalities of the exhaust gas temperature sensor 11 can be appropriately determined during any of the fuel cut and the fuel supply to improve the determination accuracy by comparing the gas temperature difference ATCATA which is the absolute value of the difference between the estimated post-catalyst gas temperature TCAREF and the detected post-catalyst gas temperature TCATA with the threshold value ΔTREF.

Also, since the abnormality determination can be performed during a fuel cut in addition to a fuel supply, opportunities of executing the same can be sufficiently ensured.

Further, since the threshold value ΔTREF is set in accordance with the fuel injection amount QINJ, the threshold value ATREF can be appropriately set in accordance with the susceptibility to a deviation of the estimated post-catalyst gas temperature TCAREF to appropriately perform the abnormality determination.

It should be understood that the present invention is not limited to the embodiment described above, but can be practiced in a variety of manners. For example, while the pre-catalyst gas temperature TCATB is calculated in accordance with the operating condition of the engine in the foregoing embodiment, a temperature sensor may be provided at a location upstream of the oxidation catalyst 7 , and the pre-catalyst gas temperature TCATB may be directly detected by this temperature sensor. In this event, through the process shown in Fig. 2, it can be determined that either the upstream temperature sensor or the downstream temperature sensor 11 is abnormal. Also, the estimated post-catalyst gas temperature TCAREF is calculated using the filter circuit 2a in the foregoing embodiment, but, not limited to this, the estimated post-catalyst gas temperature TCAREF may be calculated, for example, using a weighted average of the pre-catalyst gas temperature TCATB and the preceding value of the estimated post-catalyst gas temperature TCAREF.

Further, while abnormalities are determined for the exhaust gas temperature sensor provided at a location downstream or upstream of the oxidation catalyst in the foregoing embodiment, the present invention is not so limited, but the oxidation catalyst, for example, may be omitted, and can be applied to an exhaust gas temperature sensor provided at an arbitrary position in the exhaust system.

Further, wile the foregoing embodiment has shown an example in which the present invention is applied to a diesel engine, the present invention is not limited to this particular engine, but can be applied to a variety of engines other than the diesel engine, including an engine for vessel propeller such as an outboard engine which has a crank shaft arranged in the vertical direction. Otherwise, details in the configuration may be modified as appropriate without departing from the scope of the present invention.

An abnormality determination apparatus for a temperature detector is provided for improving the accuracy of abnormality determination. The temperature detector detects the temperature of exhaust gases emitted from an internal combustion engine to an exhaust system. The abnormality determination apparatus comprises an ECU for capturing the temperature of the exhaust gases at a location upstream of an exhaust gas purifying device provided in the exhaust system as an upstream temperature, and a downstream temperature sensor for detecting the temperature of the exhaust gases at a location downstream of the exhaust gas purifying device as a downstream temperature. The abnormality determination apparatus is characterized in that the ECU determines whether or not a supply of a fuel to the internal combustion engine is being stopped, estimates the downstream temperature in accordance with the captured upstream temperature, so as to increase a delay in change in temperature with respect to the upstream temperature when it is determined that fuel supply to the internal combustion engine is being stopped than when the fuel is being supplied, and determines an abnormality in at least one of the upstream temperature capturing means and the downstream temperature sensor in accordance with the result of a comparison between the estimated downstream temperature and the detected downstream temperature.

**Claims**

1. An abnormality determination apparatus (1) for a temperature detector for detecting a temperature of exhaust gases emitted from an internal combustion engine (3) to an exhaust system, comprising:

upstream temperature capturing means (13) for capturing the temperature of the exhaust gases at a location upstream of an exhaust gas purifying device (7) provided in said exhaust system as an upstream temperature (TA); and

a downstream temperature sensor (11) for detecting the temperature of the exhaust gases at a location downstream of said exhaust gas purifying device (7) as a downstream temperature (TCATA),

said abnormality determination apparatus (1) **characterized by** comprising:

fuel supply stop determining means (2) for determining whether or not a supply of a fuel to said internal combustion engine (3) is being stopped;

downstream temperature estimating means (2) for estimating the downstream temperature (TCAREF) in accordance with the captured upstream temperature (TA), so as to increase a delay in change in temperature (TFC, TFCN) with respect to the upstream temperature (TA) when it is determined that fuel supply to said internal combustion engine (3) is being stopped, compared to when the fuel is being supplied; and

abnormality determining means (2) for determining an abnormality in at least one of said upstream temperature capturing means (13) and said downstream temperature sensor (11) in accordance with a result of a comparison between the estimated downstream temperature (TCAREF) and the detected downstream temperature (TCATA), when it is determined that fuel supply to said internal combustion engine (3) is being stopped.

2. An abnormality determination apparatus (1) for a temperature detector according to claim 1, wherein said downstream temperature estimating means (2) comprises a filter circuit.

3. An abnormality determination method for a temperature detector for detecting a temperature of exhaust gases emitted from an internal combustion engine (3) to an exhaust system, wherein the temperature of the exhaust gases at a location upstream of an exhaust gas purifying device (7) provided in said exhaust system is captured by upstream temperature capturing means (13) as an upstream temperature (TA), and the temperature of the exhaust gases at a location downstream of said exhaust gas purifying device (7) is detected by downstream temperature sensor (11) as a downstream temperature (TCATA),

said abnormality determination method **characterized by** comprising the steps of:

determining whether or not a supply of a fuel to said internal combustion engine (3) is being stopped;

estimating the downstream temperature (TCAREF) in accordance with the captured upstream temperature (TA), so as to increase a delay in change in temperature (TFC, TFCN) with respect to the upstream temperature (TA) when it is determined that fuel supply to said internal combustion engine (3) is being stopped, compared to when the fuel is being supplied; and

determining an abnormality in at least one of said upstream temperature capturing means (13) and said downstream temperature sensor (11) in accordance with the result of a comparison between the estimated downstream temperature (TCAREF) and the detected downstream temperature (TCATA), when it is determined that fuel supply to said internal combustion engine (3) is being stopped.

4. An abnormality determination method for a temperature detector according to claim 3, wherein said downstream temperature is estimated using a filter circuit (2a).

**Patentansprüche**

1. Vorrichtung (1) zum Feststellen einer Anomalie für einen Temperaturdetektor zum Detektieren einer Temperatur von Auslassgasen, die von einem Verbrennungsmotor (3) an ein Auslasssystem emittiert werden, umfassend:

stromaufwärtige Temperaturerfassungsmittel (13) zum Erfassen der Temperatur der Auslassgase als eine stromaufwärtige Temperatur (TA) an einer Stelle stromaufwärts von einer in dem Auslasssystem bereitgestellten Auslassgasreinigungsvorrichtung (7); und

einen stromabwärtigen Temperatursensor (11) zum Detektieren der Temperatur der Auslassgase als eine stromabwärtige Temperatur (TCATA) an einer Stelle stromabwärts von der Auslassgasreinigungsvorrichtung (7),

wobei die Vorrichtung (1) zum Feststellen einer Anomalie **dadurch**

**gekennzeichnet ist, dass** sie umfasst:

Treibstoffzufuhranhaltfeststellmittel (2), um festzustellen, ob eine Treibstoffzufuhr zu dem Verbrennungsmotor (3) angehalten ist oder nicht;

stromabwärtige Temperaturschätzmittel (2) zum Schätzen der stromabwärtigen Temperatur (TCAREF) gemäß der erfassten stromaufwärtigen Temperatur (TA), um eine Verzögerung einer Änderung einer Temperatur (TFC, TFCN) in Bezug zu der stromaufwärtigen Temperatur (TA) zu vergrößern, wenn festgestellt wird, dass eine Treibstoffzufuhr zu dem Verbrennungsmotor (3) angehalten ist, im Vergleich zu, wenn der Treibstoff zugeführt wird; und

Anomaliefeststellmittel (2) zum Feststellen einer Anomalie in wenigstens einem von den stromaufwärtigen Temperaturerfassungsmitteln (13) und dem stromabwärtigen Temperatursensor (11) gemäß einem Ergebnis eines Vergleichs zwischen der geschätzten stromabwärtigen Temperatur (TCAREF) und der detektierten stromabwärtigen Temperatur (TCATA), wenn festgestellt wird, dass eine Treibstoffzufuhr zu dem Verbrennungsmotor (3) angehalten ist.

2. Vorrichtung (1) zum Feststellen einer Anomalie für einen Temperaturdetektor nach Anspruch 1, wobei die stromabwärtigen Temperaturschätzmittel (2) einen Filterschaltkreis umfassen.

3. Verfahren zum Feststellen einer Anomalie für einen Temperaturdetektor zum Detektieren einer Temperatur von Auslassgasen, die von einem Verbrennungsmotor (3) an ein Auslasssystem emittiert werden, wobei die Temperatur der Auslassgase an einer Stelle stromaufwärts von einer in dem Auslasssystem bereitgestellten Auslassgasreinigungsvorrichtung (7) durch stromaufwärtige Temperaturerfassungsmittel (13) als eine stromaufwärtige Temperatur (TA) erfasst wird und die Temperatur der Auslassgase an einer Stelle stromabwärts von derAuslassgasreinigungsvorrichtung (7) durch einen stromabwärtigen Temperatursensor (11) als eine stromabwärtige Temperatur (TCATA) detektiert wird,
wobei das Verfahren zum Feststellen einer Anomalie **dadurch**
**gekennzeichnet ist, dass** es die Schritte umfasst:
Feststellen, ob eine Treibstoffzufuhr zu dem Verbrennungsmotor (3) angehalten ist oder nicht;
Schätzen der stromabwärtigen Temperatur (TCAREF) gemäß der erfassten stromaufwärtigen Temperatur (TA), um eine Verzögerung einer Änderung einer Temperatur (TFC, TFCN) in Bezug zu der stromaufwärtigen Temperatur (TA) zu vergrößern, wenn festgestellt wird, dass eine Treibstoffzufuhr zu dem Verbrennungsmotor (3) angehalten ist, im Vergleich zu, wenn der Treibstoff zugeführt wird; und
Feststellen einer Anomalie in wenigstens einem von den stromaufwärtigen Temperaturerfassungsmitteln (13) und dem stromabwärtigen Temperatursensor (11) gemäß dem Ergebnis eines Vergleichs zwischen der geschätzten stromabwärtigen Temperatur (TCAREF) und der detektierten stromabwärtigen Temperatur (TCATA), wenn festgestellt wird, dass eine Treibstoffzufuhr zu dem Verbrennungsmotor (3) angehalten ist.

4. Verfahren zum Feststellen einer Anomalie für einen Temperaturdetektor nach Anspruch 3, wobei die stromabwärtige Temperatur mittels eines Filterschaltkreises (2a) geschätzt wird.

**Revendications**

1. Appareil de détermination d'anomalie (1) pour un détecteur de température permettant de détecter une température de gaz d'échappement émis par un moteur à combustion interne (3) vers un système d'échappement, comprenant :

un moyen de prise de température amont (13) permettant de prendre la température des gaz d'échappement à un emplacement en amont d'un dispositif de purification de gaz d'échappement (7) disposé dans ledit système d'échappement en tant que température amont (TA) ; et
un capteur de température aval (11) permettant de détecter la température des gaz d'échappement à un emplacement en aval dudit dispositif de purification de gaz d'échappement (7) en tant que température aval (TCATA),
ledit appareil de détermination d'anomalie (1) étant **caractérisé en ce qu'**il comprend :

un moyen de détermination d'interruption d'alimentation en carburant (2) permettant de déterminer si une alimentation en carburant dudit moteur à combustion interne (3) est interrompue ou non ;

un moyen d'estimation de température aval (2) permettant d'estimer la température aval (TCAREF) en conformité avec la température amont (TA) prise, de façon à augmenter un retard de changement de température (TFC, TFCN) par rapport à la température amont (TA) lorsqu'il est déterminé que l'alimentation en carburant dudit moteur à combustion interne (3) est interrompue, en comparaison au cas où le carburant est alimenté ; et

un moyen de détermination d'anomalie (2) permettant de déterminer une anomalie dans au moins l'un dudit moyen de prise de température amont (13) et dudit capteur de température aval (11) en conformité avec un résultat d'une comparaison entre la température aval estimée (TCAREF) et la température aval détectée (TCATA), lorsqu'il est déterminé que l'alimentation en carburant dudit moteur à combustion interne (3) est interrompue.

2. Appareil de détermination d'anomalie (1) pour un détecteur de température selon la revendication 1, dans lequel ledit moyen d'estimation de température aval (2) comprend un circuit de filtre.

3. Procédé de détermination d'anomalie pour un détecteur de température permettant de détecter une température de gaz d'échappement émis par un moteur à combustion interne (3) vers un système d'échappement, dans lequel la température des gaz d'échappement à un emplacement en amont d'un dispositif de purification de gaz d'échappement (7) disposé dans ledit système d'échappement est prise par un moyen de prise de température amont (13) en tant que température amont (TA), et la température des gaz d'échappement à un emplacement en aval dudit dispositif de purification de gaz d'échappement (7) est détectée par un capteur de température aval (11) en tant que température aval (TCATA),

ledit procédé de détermination d'anomalie étant **caractérisé en ce qu'**il comprend les étapes consistant à :

déterminer si une alimentation en carburant dudit moteur à combustion interne (3) est interrompu ou non ;

estimer la température aval (TCAREF) en conformité avec la température amont (TA) prise, de façon à augmenter un retard de changement de température (TFC, TFCN) par rapport à la température amont (TA) lorsqu'il est déterminé que l'alimentation en carburant dudit moteur à combustion interne (3) est interrompue en comparaison au cas où le carburant est alimenté ; et

déterminer une anomalie dans au moins l'un dudit moyen de prise de température amont (13) et dudit capteur de température aval (11) en conformité avec le résultat d'une comparaison entre la température aval estimée (TCAREF) et la température aval détectée (TCATA), lorsqu'il est déterminé que l'alimentation en carburant dudit moteur à combustion interne (3) est interrompue.

4. Procédé de détermination d'anomalie pour un détecteur de température selon la revendication 3, dans lequel ladite température aval est estimée à l'aide d'un circuit de filtre (2a).

EP 1 895 131 B1

FIG. 1

F I G. 2

```
        ┌─────────────────────┐
        │   ABNORMALITY       │
        │   DETERMINATION     │
        └─────────────────────┘
                  │
                  ▼            S1
        ┌─────────────────────┐
        │  CALCULATE  TCATB   │
        └─────────────────────┘
                  │
                  ▼            S2
            ┌───────────────┐        YES
            │ DURING FUEL CUT ? ├──────────┐
            └───────────────┘              │
                  │ NO                      │
                  ▼            S3           │
     NO   ┌───────────────────────┐        │
    ┌─────┤   PREDETERMINED       │        │
    │     │ OPERATING CONDITION ? │        │
    │     └───────────────────────┘        │
    │             │ YES                     │
    │             ▼◄───────────────────────┘
    │             │             S5
    │       ┌───────────────┐      NO
    │       │  TMDLY = 0 ?  ├──────────────┐
    │       └───────────────┘              │
    │             │ YES        S6          │
    │   NO  ┌─────────────────────┐        │
    │◄──────┤ EXECUTION CONDITION │        │
    │       │ ESTABLISHED ?       │        │
    │       └─────────────────────┘        │
    │             │ YES         S7         │
    ▼  S4   ┌─────────────────────┐        │
┌─────────┐ │  CALCULATE  TCAREF  │        │
│ TMDLY ← │ └─────────────────────┘        │
│ TMREF   │           │         S8         │
└─────────┘           ▼                    │
            ┌─────────────────────┐        │
            │ ΔTCATA ←            │        │
            │ |TCAREF − TCATA|    │        │
            └─────────────────────┘        │
                      │         S9         │
                      ▼                    │
            ┌─────────────────────┐        │
            │ CALCULATE  ΔTREF    │        │
            │ IN ACCORDANCE WITH QINJ │    │
            └─────────────────────┘        │
                      │         S10        │
                      ▼          NO        │
            ┌─────────────────────┐        │
            │ ΔTCATA ≧ ΔTREF ?    ├───┐    │
            └─────────────────────┘   │    │
                      │ YES  S12      │ S11│
              ┌──────────────┐  ┌──────────────┐
              │ F_EXCNG ← 1  │  │ F_EXCNG ← 0  │
              └──────────────┘  └──────────────┘
                      │                │   │
                      ▼◄───────────────┘◄──┘
                 ┌─────────┐
                 │ RETURN  │
                 └─────────┘
```

$\Delta TCATA \leftarrow |TCAREF - TCATA|$

$\Delta TCATA \geqq \Delta TREF$ ?

# FIG. 3

```
         ( CALCULATION OF TCATB )
                     │
                     ▼                    S21
              ╱  DURING FILTER  ╲
             ⟨   REGENERATING    ⟩  YES ──────────┐
              ╲  OPERATION ?    ╱                  │
                     │ NO                          │
                     ▼      S22                    ▼      S24
            ┌──────────────────┐         ┌──────────────────┐
            │   TCBBS ← TCB     │         │  TCBBS ← TCBRE   │
            └──────────────────┘         └──────────────────┘
                     │      S23                    │      S25
                     ▼                             ▼
            ┌──────────────────┐         ┌──────────────────┐
            │   KTEX ← TEX      │         │  KTEX ← TEXRE    │
            └──────────────────┘         └──────────────────┘
                     │                             │
                     ◄─────────────────────────────┘
                     ▼      S26
            ┌──────────────────┐
            │  CALCULATE KTW    │
            └──────────────────┘
                     │      S27
                     ▼
            ┌──────────────────┐
            │  TCATB ←          │
            │  TCBBS × KTEX × KTW │
            └──────────────────┘
                     │
                     ▼
            (     RETURN     )
```

# FIG. 4

| | LOWER ← | NE | HIGHER → |
|---|---|---|---|
| SMALLER ↑ | TCB11 · · · · · · · · · · · · · · | | · · · · TCB1n |
| QINJ | | | |
| LARGER ↓ | TCBm1 · · · · · · · · · · | | · · · · · · TCBmn |

F I G.  5

```
       ┌─────────────────────────────┐
       │  CALCULATION OF TCAREF       │
       └─────────────────────────────┘
                     │
                     ▼            S31
              ┌─────────────────┐  YES
              < DURING FUEL CUT ? >─────────┐
              └─────────────────┘           │
                     │ NO                    │
                     ▼      S32              ▼      S33
          ┌──────────────────┐    ┌──────────────────┐
          │   T ← TFCN        │    │   T ← TFC         │
          └──────────────────┘    └──────────────────┘
                     │                      │
                     │◄─────────────────────┘
                     ▼      S34
          ┌──────────────────┐
          │  CALCULATE  TCAREF │
          └──────────────────┘
                     │
                     ▼
              ┌──────────────┐
              │   RETURN     │
              └──────────────┘
```

F I G. 6

F I G.  7 A

TCATA

TCAREF

TCATB

TIME

F I G.  7 B

TCATA

TCATB

TCAREF

TIME

**EP 1 895 131 B1**

## REFERENCES CITED IN THE DESCRIPTION

### Patent documents cited in the description

- JP 2005140069 A

- US 20050102076 A